# EUROPEAN PATENT SPECIFICATION

(11) **EP 2 033 379 B1**
(45) Date of publication and mention of the grant of the patent: **26.09.2012**
(21) Application number: 07736394.3
(22) Date of filing: 30.05.2007
(51) Int. Cl.: H04L 12/56, H04L 12/24

(54) **METHOD AND SYSTEM FOR DETERMINING TOPOLOGY OF A DYNAMIC NETWORK**
VERFAHREN UND SYSTEM ZUR BESTIMMUNG DER TOPOLOGIE EINES DYNAMISCHEN NETZWERKS
PROCÉDÉ ET SYSTÈME POUR DETERMINER LA TOPOLOGIE D'UN RÉSEAU DYNAMIQUE

(30) Priority: 30.05.2006 US 808984 P
(43) Date of publication of application: 11.03.2009
(73) Proprietor: INSIGHTIX LTD, Ra'anana 43665 (IL)
(72) Inventor: ARKIN, Ofir, 21861 Carmiel (IL)
(74) Representative: Modiano, Micaela Nadia
(86) International application number: PCT/IL2007/000654
(87) International publication number: WO 2007/138591

(56) References cited:
- US-A- 5 734 824
- US-A1- 2005 099 954
- US-A1- 2006 023 640

## Description

### FIELD OF THE INVENTION

This invention relates to the field of communication network topology. More specifically, this invention relates to determining topology of a dynamic network.

### BACKGROUND OF THE INVENTION

WO 2005/053230 provides a method and a system for collecting information relating to a communication network. Data conveyed by nodes operating in the communication network is detected in a manner that is transparent to the nodes. The detected data is analyzed for identifying information relating to the communication network and for identifying missing information. In order to complete the missing information, one or more of the nodes are queried.

Collecting information relating to a communication network is dealt with not only in patent publications. To this end, see, for example, the article *"*The Present and Future of Xprobe2, The Next Generation of Active Operating System Fingerprinting" (Ofir Arkin et al., published on the Internet in July 2003, see http://www.sys-security.com/archive/papers/Present and Future Xprobe2-v1.0.pdf) describing a system performing active operating system fingerprinting. According to *The Present and Future of Xprobe2,* active operating system fingerprinting is the process of actively determining a targeted network node's underlying operating system by probing the targeted system with several packets and examining the response(s) received.

*"*Topology discovery for Large Ethernet Networks" (Bruce Lowekamp et al., SIGCOMM '01, August 27-31, 2001, San Diego, California, USA) teaches how to determine the connection between a pair of bridges that share forwarding entries for only three hosts, requiring access to only one endpoint to perform the queries needed for topology discovery.

*"*Topology discovery in heterogeneous IP networks" (Y. Breitbart et al., in proceedings of INFOCOM 2000, March 2000) describes discovering physical topology in heterogeneous (i.e., multi-vendor) IP networks, relying on standard SNMP MIB information. The method of Breitbard *et al.* can discover the physical network topology in time that is roughly quadratic in the number of network elements.

"Physical Topology Discovery for Large Multi-Subnet Networks" (Y. Bejerano et al., in proceedings of INFOCOM 2003) describes an algorithmic solution for discovering the physical topology of a large, heterogeneous Ethernet network comprising multiple subnets as well as dumb or uncooperative network elements. The algorithm relies on standard SNMP MIS information.

### SUMMARY OF THE INVENTION

The invention provides a method for determining topology of a dynamic network in respect of which there is maintained network data containing (a) node data representing a set of nodes, (b) address data representing a respective MAC (Media Access Control) address of each node and (c) connectivity data representing a respective connectivity of each node, the method comprising:
cyclically monitoring the dynamic network so as to determine during each cycle new nodes that have been connected to the dynamic network since a previous cycle and vanished nodes that have been disconnected from the dynamic network since the previous cycle;
determining the respective connectivity of each new node by identifying a port in a switch to which the respective new node is connected;
augmenting said network data so as to include node data representative of the new nodes, and the respective address data and connectivity data of each new node; and
removing node data representative of each vanished node as well its respective address data and connectivity data from said network data;
whereby at the end of each cycle the respective connectivity data of all nodes in said set are indicative of the respective network topology.

The invention further provides an apparatus for determining topology of a dynamic network, the apparatus comprising:
a memory device for maintaining network data containing (a) node data representing a set of nodes, (b) address data representing a respective MAC (Media US 5734824 discloses a system of discovering the active topology of the local area networks (LANs) connected via any apparent bridges that conform to the IEEE 802.1D standard. A network management module (NMM) is placed on each LAN segment that may communicate with other LAN segments over a network by using transparent bridges. Once each NMM has gathered adjacency information regarding its adjacent LANs in an adjacency database, this adjacency database is multicast over the system to all other LANs, so that each representative NMM of each LAN knows the adjacency information of the other LANs. Access Control) address of each node and (c) connectivity data representing a respective connectivity of each node,
a monitoring module for cyclically monitoring the dynamic network so as to determine during each cycle new nodes that have been connected to the dynamic network since a previous cycle and vanished nodes that have been disconnected from the dynamic network since the previous cycle;
a connectivity determining module for determining the respective connectivity of each new node by identifying a port in a switch to which the respective new node is connected;
a network data augmenting module for augmenting said network data so as to include node data representative of the new nodes, and the respective address data and connectivity data of each new node; and
a network data removing module for removing node data representative of each vanished node as well its respective address data and connectivity data from said network data.

### BRIEF DESCRIPTION OF THE DRAWINGS

In order to understand the invention and to see how it may be carried out in practice, embodiments will now be described, by way of non-limiting example only, with reference to the accompanying drawings, in which:
**Figure 1** is a schematic illustration of a network including a topology detector, according to one embodiment of the invention;
**Figure 2** is a flowchart illustrating the main procedures taken while determining topology of a dynamic network, according to one embodiment of the invention;
**Figure 3** is a flowchart illustrating determining network connectivity, according to one embodiment of the invention;
**Figure 4** is a flowchart illustrating determining the respective connectivity of a new node, according to one embodiment of the invention;
**Figure 5** is a flowchart illustrating removing node data, address data and connectivity data respective to a vanished node from the network data, according to one embodiment of the invention; and
**Figure 6** is a block diagram illustrating a topology detector, according to one embodiment of the invention.

### DETAILED DESCRIPTION OF EMBODIMENTS

In the following description components that are common to more than one figure will be referenced by the same reference numerals.

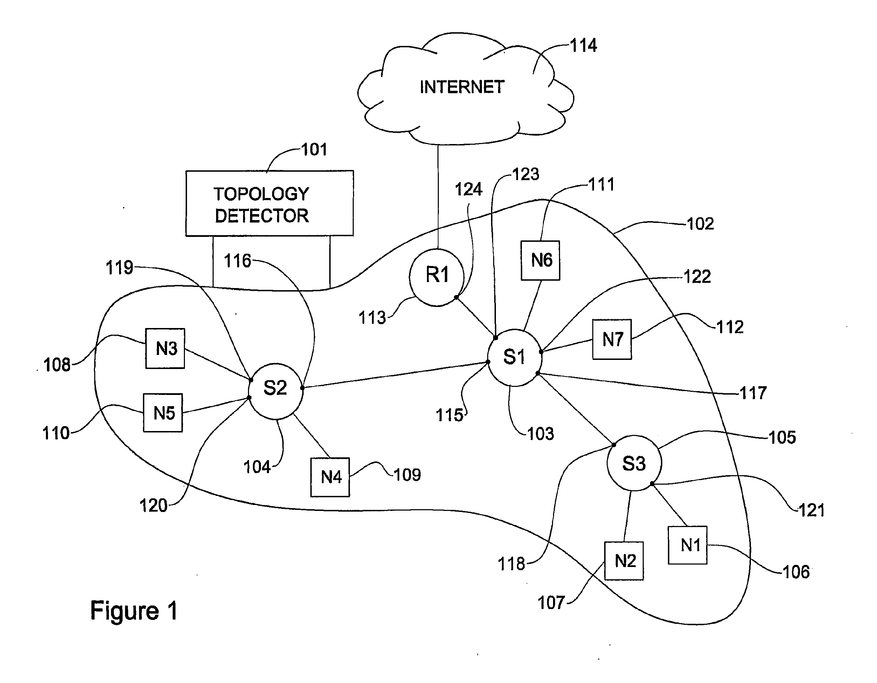

**Figure 1** is a schematic illustration of a system named a topology detector **101** coupled to a network **102,** according to one embodiment of the invention. The network constitutes a "monitored communication network". According to the example, there are three switches, **103, 104** and **105,** included in the network **102.** Each switch (**103, 104** and **105**) is coupled to "elements", or "nodes" in the network. Specifically, in the figure these are nodes **106** and **107** that are coupled to the network **102** via switch **105,** nodes **108, 109** and **110,** which are coupled via switch **104,** and nodes **111** and **112** that are coupled to the network **102** via switch **103.** The switch **103** is coupled also to a router **113** connecting the network **102** and the nodes being part thereof to the Internet **114.**

Hereinafter, every element coupled to a network will be considered as a node, including switches and routers. According to the invention, each node is characterized, amongst other things, by a classification indicative of the type of the node, wherein a node can be classified, e.g., as a switch, a router, a host, a printer, a terminal, etc. In addition, switches and routers are joined under a single super-classification constituting "connecting nodes". All other nodes constitute together "end nodes".

The term "connectivity data" is used for describing a first node and a second node coupled thereto. If the first node is a connecting node, "connectivity data" refers to a port in the connecting node and the node coupled thereto. Even further, "connectivity data of a node" refers to the node and another node (or port) coupled thereto. The respective connectivity data of all the nodes being part of a network are indicative of the respective network topology.

It is noted that **Figure 1** presents a non-limiting example while the nodes being part of the network **102** and the network's respective topology can be different than what is illustrated in the figure. For example, there can be any applicable number of switches and any switch be coupled to any number of nodes, including more than one router, etc.

According to the embodiment, the topology detector **101** maintains node data representing a set of nodes being part of a network. In the example of **Figure 1**, the node data represents a set including nodes {**103, 104, 105, 106, 107, 108, 109, 110, 111, 112**}. It is appreciated that in order to determine which nodes are represented in the node data, *prima facie* those versed in the art may apply, e.g., the method taught by WO 2005/053230.

In addition, the topology detector **101** maintains address data representing a respective MAC (Media Access Control) address of each node and connectivity data representing a respective connectivity of each node. The node data, address data and connectivity data constitute together "network data". While it appears as if the MAC address of each node can be determined, e.g., in accordance with WO 2005/053230, it can be mistakenly considered that connectivity data of all the nodes in a network can be determined, e.g., in accordance with the articles *"Topology discovery for Large Ethernet Networks"* or in accordance with *"Topology discovery in heterogeneous IP networks ".*

It should be appreciated that a topology detector **101** operating in accordance with WO 2005/053230, applies passive and active methods for collecting information. Therefore the topology detector **101** has two connections coupling it to the network **102.**

However, it should be appreciated that a network (such as network **102**) can be a "dynamic network" wherein "new nodes" can connect thereto from time to time, while "vanished nodes" can disconnect therefrom. The embodiment illustrated hereinafter provides a method for determining topology of a dynamic network.

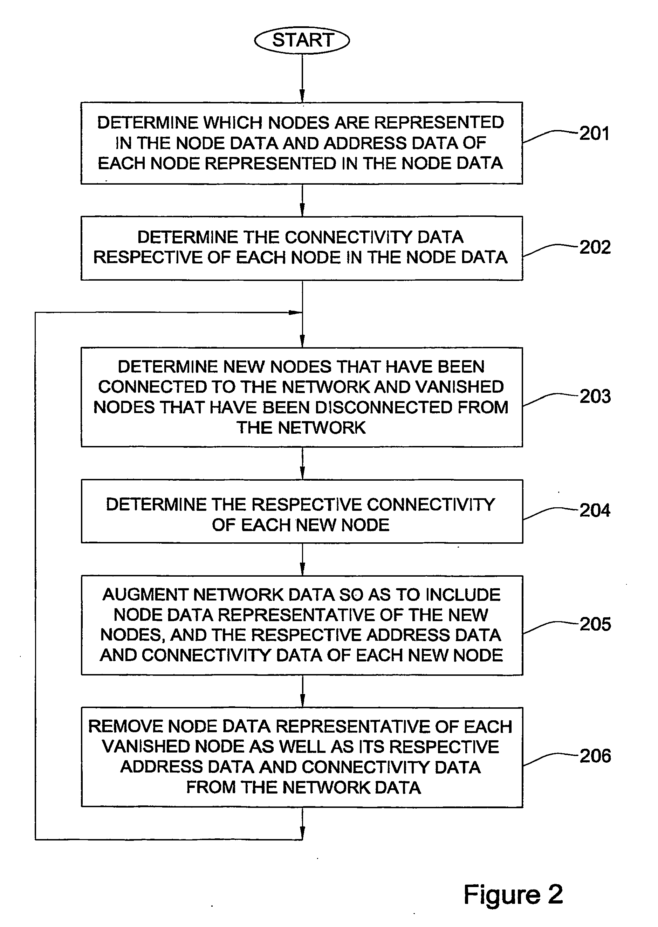

**Figure** 2 is a flowchart illustrating the main procedures taken while determining topology of a dynamic network, according to one embodiment of the invention. Upon startup, on **201** the topology detector **101** determines which nodes are represented in the node data, e.g., by applying the passive and/or active methods of WO 2005/053230. The node data generated by **201** constitutes a "baseline". It should be appreciated that the node data is stored in a memory device accessible to the topology detector **101,** while the memory device can be a short term memory device (such as Random Access Memory, RAM) or a long term memory device (such as a disk, flash memory etc.). The methods of WO 2005/053230 can reveal also the MAC address of each node, hence **201** includes also determining address data representing a respective MAC address of each node. Like the node data, address data is also stored in a short or long term memory device accessible to the topology detector.

Then, on **202,** the topology detector **101** determines the connectivity data respective of each node in the node data, e.g., in accordance with *"Topology discovery for Large Ethernet Networks"* or *"Topology discovery in heterogeneous IP networks".* Similarly to the node data and to the address data, the topology detector stores the connectivity data in a memory device accessible thereto. Like the previously mentioned memory devices, the present memory device can also be a short term memory device or a long term memory device.

Because the network is a dynamic network, it has to be cyclically monitored, thus determining on **203** during each cycle new nodes that have been connected to the network since a previous cycle and vanished nodes that have been disconnected from the dynamic network since the previous cycle. On **204** the topography detector **101** determines the respective connectivity of each new node determined on **203,** and on **205** it augments the network data so as to include node data representative of the new nodes, and the respective address data and connectivity data of each new node. On 206 node data representative of each vanished node as well its respective address data and connectivity data is removed from the network data.

It should be appreciated that the flowchart of **Figure** 2 is non-limiting and other alternatives may exist. For example, it was previously explained that each of the node data, the address data and the connectivity data are stored in a short or long term memory device. Therefore, those versed in the art would appreciate that instead of determining the node data, and/or the address data and/or the connectivity data it is possible to obtain any one of them, e.g., by reading them from disk, obtaining them from the communication network etc. Generally, therefore, the network data is considered to be maintained, wherein maintaining includes determining and/or obtaining.

It should also be appreciated that the topology detector can cyclically monitory the dynamic network in near real time mode. In this case, the operating system can provide the cyclicality, e.g., by polling a file descriptor.

Turning now to determining connectivity data on **202**, for each connecting device the connectivity of each port is classified, wherein possible port classifications are "inter-switch connecting port", "switch-router connecting port" and "end-node port". An inter-switch connecting port is a port on a switch, in use for connecting to another switch. In the example **Figure 1** four inter-switch connecting ports are illustrated. Specifically, they are referenced by reference numerals **115, 116, 117** and **118**. A switch-router connecting port is a port on a switch in use for connecting to a router. A port on a router in use for connecting to a switch is also classified as a switch-router connecting port. Hence, in the example of **Figure 1**, wherein only one router is depicted (**113**), there are two switch-router connecting ports, marked by the reference numerals **123** and 124**.** A port on a switch or on a router, in use for connecting to an end-node, constitutes an end-node port. End-node ports in the example of **Figure 1** are **119, 120, 121,122** and others.

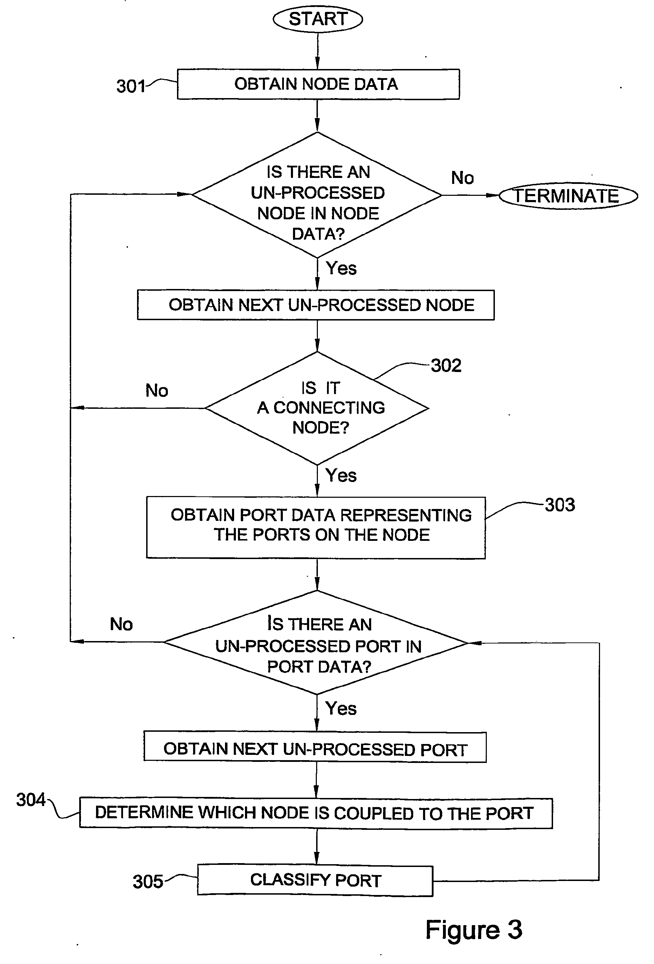

**Figure** 3 is a flowchart illustrating determining network connectivity **202**, according to one embodiment of the invention. Further to obtaining node data on **301**, each node in the set of nodes represented by the node data is processed as follows: On **302** the classification of each un-processed node is checked, in order to determine whether this is a connecting node or an end node. If the node is an end-node, the next un-processed node is obtained from the node data. Alternatively, upon determining that the un-processed node is a connecting node, on **303** the "port data" of the node is obtained wherein the port data represents a set of ports on the connecting node. For each port in the port data, determine (on **304**) the node coupled to the port, and on **305** the port is classified in accordance with the classification of the coupled node. It should be appreciated by those versed in the art that according to one embodiment obtaining port data (**303**) and determining which port is coupled to the port (on **304**) are performed using SNMP MIB information.

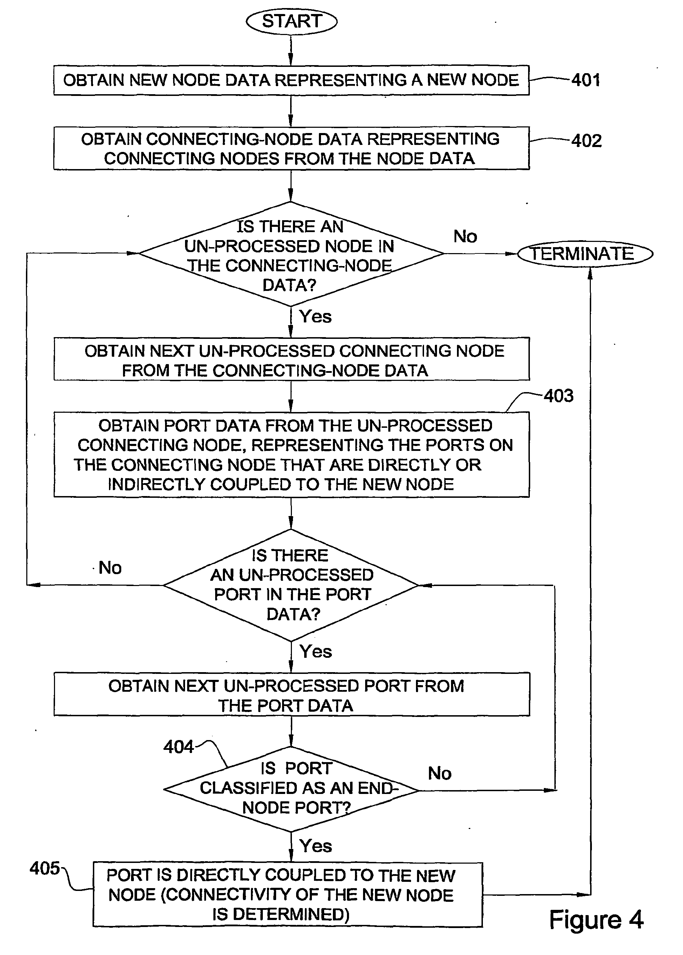

**Figure** 4 is a flowchart illustrating determining the respective connectivity of a new node, according to one embodiment of the invention. Further to **401**, wherein "new-node data" is obtained, representative of the new node whose respective connectivity should be determined, and further to **402**, wherein "connecting-node data" representing connecting nodes in the node data is obtained, every connecting node represented in the connecting-node data is processed in order to determine whether the new node is directly coupled to a port thereof. In order to do so, on **403**, port data is obtained from every connecting node represented in the connecting-node data. The port data represents those ports on the connecting node that are directly or indirectly coupled to the new node. Direct coupling means that the new node is an end node directly coupled to a port on the present connecting node. Indirect coupling means that the new node is directly coupled to another connecting node, yet, the present connecting node is familiar with the MAC address of the new node, i.e., the present connecting node is directly or indirectly coupled to the another connecting node, and via this another connecting mode indirect coupling to the new node is achieved.

Each port represented in the port data is processed and on **404** its respective classification is checked. If the port is an end-node port, this implies on **405** that the new node is directly coupled to this port and hence to the presently processed connecting node. On the other hand, if on **404** the port's classification is determined to be an inter-switch port or a switch-router port, this implies that the coupling is indirect and the flowchart continues processing other ports on the presently processed connecting node, or on other connecting nodes, looking for a direct coupling with the new node.

It should be appreciated that upon determining on **405** that one connecting node is directly coupled to the new node, connectivity of the new node is determined by the coupling of the new node to the port in the connecting node. Returning to **205** on **Figure** 2, the new node's data, its respective address data, and the newly determined connectivity data are included in the augmented network data.

Yet, it should be appreciated that upon connecting a new connecting node to the network, at least one port of the new connecting node is directly coupled with at least one port of a connecting node being part of the network. However, since classification of the new connecting node reveals that the new node is a connecting node, those versed in the art might appreciate that the flowchart of **Figure** 4 will erroneously identify the coupling therewith as indirect coupling. According to one embodiment of the invention, in order to overcome this problem, in **404,** upon determining that an inter-switch port or a switch-router port is coupled to a connecting node to which no other nodes have been connected, this port will be temporarily considered as an end-node port, until one or more new nodes will connect to any one of the new connecting node's ports. Because a connecting node normally connects to a network before any other nodes connect thereto, the topography detector would determine that the coupling of the new connecting node to the connecting node being part of the network is direct coupling. Alternatively, immediately after determining that the new connecting node is directly coupled to the connecting node being part of the network, the ports classification can be altered to be inter-switch ports or switch-router ports as required.

In an alternative embodiment, upon obtaining an indication that a new connecting node has been connected to the network, the topography detector will reset the network data, thus returning to **201** in **Figure** 2.

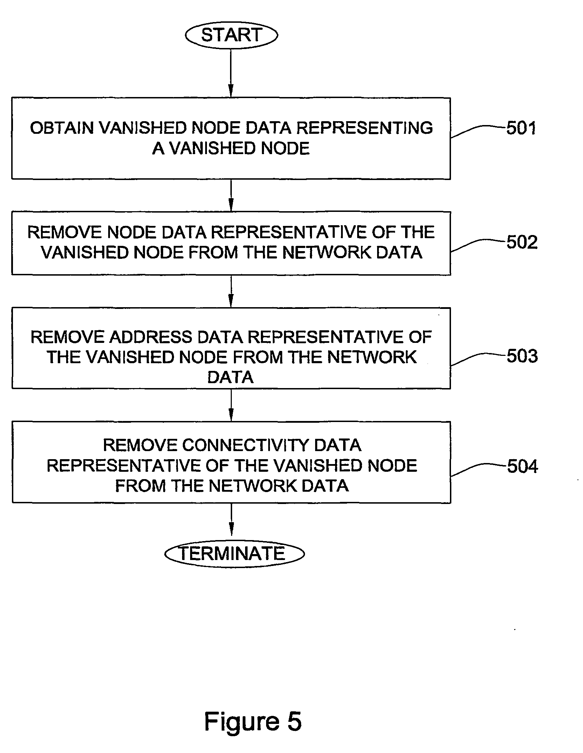

**Figure 5** is a flowchart illustrating removing node data, address data and connectivity data respective to a vanished node from the network data, according to one embodiment of the invention. According to the embodiment, upon obtaining, on **501,** "vanished node data", representative of the vanished node, on **502** the topography detector removes node data representative of the vanished node from the network data, on **503** the address data representative of the vanished node is removed from the network data, and on **504** the connectivity data representative of the vanished node is removed from the network data. Hence, further to performing the operations described on **501, 502, 503** and **504** the respective connectivity data of all nodes in the network data are indicative of the respective network topology.

It can be appreciated that the flowchart of **Figure** 5 is non-limiting and alternatives may exist. For example, the order of the operations performed thereby can change.

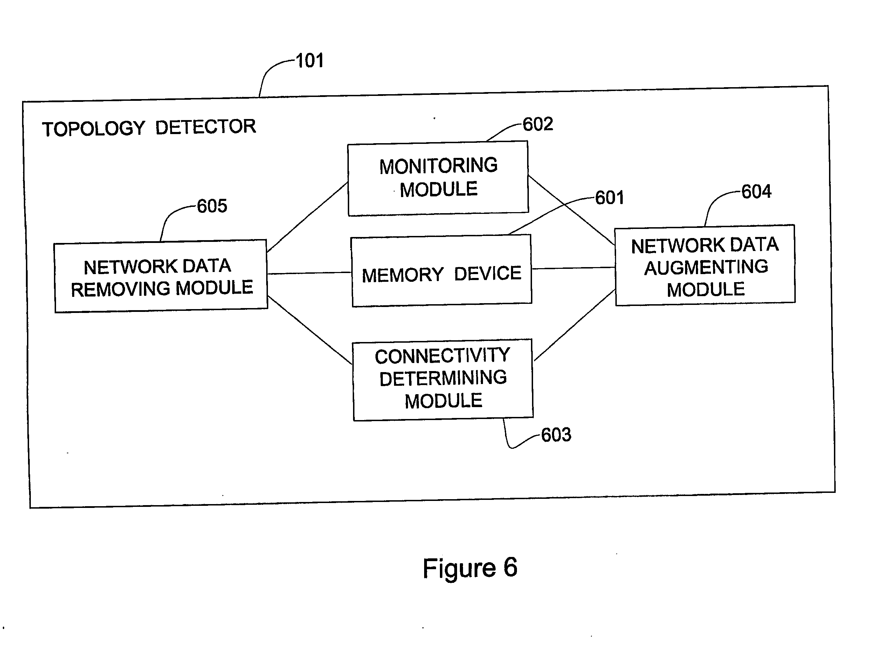

**Figure** 6 is a block diagram illustrating a topology detector **101**, which is an apparatus for determining topology of a dynamic network, according to one embodiment of the invention. According to the embodiment the topology detector includes a memory device **601,** a monitoring module **602,** a connectivity determining module **603,** a network data augmenting module **604** coupled to the monitoring module **602** and to the connectivity determining module **603,** and a network data removing module **605** coupled to the monitoring module **602** and to the connectivity determining module **603.** Each of the monitoring module **602,** the connectivity determining module **603,** the network data augmenting module **604** and the network data removing module **605** is coupled to the memory device **601.**

It was mentioned earlier, with reference to **Figure** 2, that the memory device can be a short term memory device (such as Random Access Memory, RAM) or a long term memory device (such as a disk, flash memory etc.). In addition, it should be appreciated that although in the figure one memory device (**601**) is depicted, there may exist several memory devices, e.g., one for storing node data, one for storing address data and one for storing connectivity data.

According to one embodiment, the monitoring module **602** is able to perform **203** of **Figure** 2. It can be appreciated therefore, that the monitoring module **602** can operate, e.g., in accordance with WO 2005/053230, in which case it can be the network information collector described therein.

Yet, according to another embodiment, the connectivity determining module **603,** can operate, e.g., in accordance with the flowchart illustrated in **Figure** 4. The network data augmenting module **604** can perform **205** of **Figure** 2, e.g., by storing node data, address data and connectivity data in the proper memory device. Furthermore, the network data removing module **605** can operate, according to one embodiment, in accordance with the flowchart of **Figure 5**.

It will also be understood that the apparatus according to the invention may be a suitably programmed computer. Likewise, the invention contemplates a computer program being readable by a computer for executing the method of the invention. The invention further contemplates a machine-readable memory tangibly embodying a program of instructions executable by the machine for executing the method of the invention.

## Claims

1. A method of maintaining , in near real-time, topology of a dynamic network (102), in respect of which there is maintained network data, said network data comprising (a) node data representing a set of nodes (103-112), (b) address data representing a respective MAC (Media Access Control) address of each node, and (c) connectivity data representing a respective connectivity of each node, the method comprising:
determining (203), in near real-time, that at least one new node, having a respective MAC address, is connected to the network;
querying (204) a plurality of predetermined connecting nodes in said network for identifying respective connectivity data of said at least one new node, said connectivity data related to a corresponding port in a connecting node, within said plurality of predetermined connecting nodes, to which said new at least one node is connected; and
augmenting (205) said network data so as to include node data representative of said at least one new node, and the respective address data and said corresponding connectivity data of said at least one new node.

2. The method according to claim 1, further comprising removing (206) the node data representative of each vanished node as well its respective address data and connectivity data from the network data.

3. The method according to claim 1, further comprising obtaining the maintained network data by reading the network data from a storage device.

4. The method according to claim 1, further comprising determining the maintained network data by analyzing the network.

5. An apparatus configured to maintain, in near real-time, topology of a dynamic network (102), the apparatus comprising:
a memory device (601) for maintaining network data comprising (a) node data representing a set of nodes (103-112), (b) address data representing a respective MAC (Media Access Control) address of each node, and (c) connectivity data representing a respective connectivity of each node;
a monitoring module (602) configured to determine, in near real-time, that at least one new node, having a respective MAC address, is connected to the network;
a connectivity determining module (603) configured to query a plurality of predetermined connecting nodes in said network for identifying respective connectivity data of said at least one new node, said connectivity data related to a corresponding port in a connecting node, within said plurality of predetermined connecting nodes, to which said new at least one node is connected; and
a network data augmenting module (604) configured to augment said network data so as to include node data representative of said at least one new node, and the respective address data and said connectivity data of said at least one new node.

6. The apparatus according to claim 5, further comprising a network data removing module (605) configured to remove node data representative of each vanished node as well its respective address data and connectivity data from said network data.

7. A computer program product, comprising a computer usable medium having a computer readable program code embodied therein, said computer readable program code adapted to be executed to implement a method of maintaining, in near real-time, topology of a dynamic network (102), in respect of which there is maintained network data, said network data comprising (a) node data representing a set of nodes (103-112), (b) address data representing a respective MAC (Media Access Control) address of each node, and (c) connectivity data representing a respective connectivity of each node, the method comprising:
determining (203), in near real-time, that at least one new node, having a respective MAC address, is connected to the network;
querying (204) a plurality of predetermined connecting nodes in said network for identifying respective connectivity data of said at least one new node, said connectivity data related to a corresponding port in a connecting node, within said plurality of predetermined connecting nodes, to which said new at least one node is connected; and
augmenting (205) said network data so as to include node data representative of said at least one new node, and the respective address data and connectivity data of said at least one new node.

8. The computer program product according to claim 7, wherein the method further comprises removing (206) the node data representative of each vanished node as well its respective address data and connectivity data from the network data.

9. The computer program product according to claim 7, wherein the method further comprises obtaining the maintained network data by reading the network data from a storage device.

10. The computer program product according to claim 7, wherein the method further comprises determining the maintained network data by analyzing the network.

## Patentansprüche

1. Ein Verfahren zum Pflegen, in Nahe-Echtzeit, einer Topologie eines dynamischen Netzwerks (102), in Bezug zu dem gepflegte Netzwerkdaten vorhanden sind, wobei die Netzwerkdaten folgendes aufweisen: (a) Knotendaten, die einen Satz von Knoten (103-112) repräsentieren, (b) Adressdaten, die eine jeweilige MAC-(Media Access Control)-Adresse eines jeden Knotens repräsentieren, und (c) Konnektivitätsdaten, die eine jeweilige Konnektivität eines jeden Knotens repräsentieren, wobei das Verfahren folgendes umfasst:
Bestimmen (203), in Nahe-Echtzeit, dass mindestens ein neuer Knoten, der eine jeweilige MAC-Adresse hat, mit dem Netzwerk verbunden ist;
Abfragen (204) einer Mehrzahl von vorbestimmten Verbindungsknoten in dem Netzwerk, um jeweilige Konnektivitätsdaten des mindestens einen neuen Knotens zu identifizieren, wobei die Konnektivitätsdaten einen entsprechenden Port in einem Verbindungsknoten innerhalb der Mehrzahl von vorbestimmten Verbindungsknoten betreffen, mit denen der neue mindestens eine Knoten verbunden ist; und
Vermehren (205) der Netzwerkdaten, so dass sie Knotendaten, die für den mindestens einen neuen Knoten repräsentativ sind, und die jeweiligen Adressdaten und die entsprechenden Konnektivitätsdaten des mindestens einen neuen Knotens einschließen.

2. Das Verfahren nach Anspruch 1, das weiter ein Entfernen (206) der Knotendaten, die für jeden verschwundenen Knoten repräsentativ sind, sowie dessen jeweiliger Adressdaten und Konnektivitätsdaten aus den Netzwerkdaten umfasst.

3. Das Verfahren nach Anspruch 1, das weiter umfasst, dass die gepflegten Netzwerkdaten dadurch erzielt werden, dass die Netzwerkdaten aus einer Speichervorrichtung gelesen werden.

4. Das Verfahren nach Anspruch 1, das weiter umfasst, dass die gepflegten Netzwerkdaten durch Analysieren des Netzwerkes bestimmt werden.

5. Ein Gerät, das konfiguriert ist, um in Nahe-Echtzeit eine Topologie eines dynamischen Netzwerkes (102) zu pflegen, wobei das Gerät folgendes aufweist:
eine Speichervorrichtung (601), um Netzwerkdaten zu pflegen, die aufweisen; (a) Knotendaten, die einen Satz von Knoten (103-112) repräsentieren, (b) Adressdaten, die eine jeweilige MAC-(Media Access Control)-Adresse eines jeden Knotens repräsentieren, und (c) Konnektivitätsdaten, die eine jeweilige Konnektivität eines jeden Knotens repräsentieren,
ein Überwachungsmodul (602), das konfiguriert ist, um in Nahe-Echtzeit zu bestimmen, dass mindestens ein neuer Knoten, der eine jeweilige MAC-Adresse aufweist, mit dem Netzwerk verbunden ist;
ein Konnektivitäts-Bestimmungsmodul (603), das konfiguriert ist, um eine Mehrzahl von vorbestimmten Verbindungsknoten in dem Netzwerk abzufragen, um jeweilige Konnektivitätsdaten des mindestens einen neuen Knotens zu identifizieren, wobei die Konnektivitätsdaten einen entsprechenden Port in einem Verbindungsknoten innerhalb der Mehrzahl von vorbestimmten Verbindungsknoten betreffen, mit dem der neue mindestens eine Knoten verbunden ist; und
ein Netzwerkdaten-Vermehrungsmodul (604), das konfiguriert ist, um die Netzwerkdaten zu vermehren, so dass sie Knotendaten, die für den mindestens einen neuen Knoten repräsentativ sind, und die jeweiligen Adressdaten und die Konnektivitätsdaten des mindestens einen neuen Knotens enthalten.

6. Das Gerät nach Anspruch 5, das weiter ein Netzwerkdaten-Entfernungsmodul (605) aufweist, das konfiguriert ist, um Knotendaten, die für jeden verschwundenen Knoten repräsentativ sind, sowie dessen jeweilige Adressdaten und Konnektivitätsdaten aus den Netzwerkdaten zu entfernen.

7. Ein Computerprogrammprodukt, das ein computerverwendbares Medium aufweist, welches einen computerlesbaren Programmcode enthält, wobei der computerlesbare Programmcode ausgebildet ist, um ausgeführt zu werden, um ein Verfahren zu implementieren, bei dem in Nahe-Echtzeit eine Topologie eines dynamischen Netzwerkes (102) gepflegt wird, in Bezug zu dem gepfelegte Netzwerkdaten vorhanden sind, wobei die Netzwerkdaten aufweisen: (a) Knotendaten, die einen Satz von Knoten (103-112) repräsentieren, (b) Adressdaten, die eine jeweilige MAC-(Media Access Control)-Adresse eines jeden Knotens repräsentieren, und (c) Konnektivitätsdaten, die eine jeweilige Konnektivität eines jeden Knotens repräsentieren, wobei das Verfahren umfasst:
Bestimmen (203), in Nahe-Echtzeit, dass mindestens ein neuer Knoten, der eine jeweilige MAC-Adresse hat, mit dem Netzwerk verbunden ist;
Abfragen (204) einer Mehrzahl von vorbestimmten Verbindungsknoten in dem Netzwerk, um jeweilige Konnektivitätsdaten des mindestens einen neuen Knotens zu identifizieren, wobei die Konnektivitätsdaten einen entsprechenden Port in einem Verbindungsknoten innerhalb der Mehrzahl von vorbestimmten Verbindungsknoten betreffen, mit denen der neue mindestens eine Knoten verbunden ist; und
Vermehren (205) der Netzwerkdaten, so dass sie Knotendaten, die für den mindestens einen neuen Knoten repräsentativ sind, und die jeweiligen Adressdaten und die entsprechenden Konnektivitätsdaten des mindestens einen neuen Knotens enthalten.

8. Das Computerprogrammprodukt nach Anspruch 7, wobei das Verfahren weiter folgendes umfasst, ein Entfernen (206) der Knotendaten, die für jeden verschwundenen Knoten repräsentativ sind, sowie dessen jeweiliger Adressdaten und Konnektivitätsdaten aus den Netzwerkdaten.

9. Das Computerprogrammprodukt nach Anspruch 7, wobei das Verfahren weiter umfasst, dass die gepflegten Netzwerkdaten dadurch erzielt werden, dass die Netzwerkdaten aus einer Speichervorrichtung gelesen werden.

10. Das Computerprogrammprodukt nach Anspruch 7, wobei das Verfahren weiter umfasst, dass die gepflegten Netzwerkdaten durch Analysieren des Netzwerkes bestimmt werden.

## Revendications

1. Procédé pour maintenir, au temps réel près, la topologie d'un réseau dynamique (102), par rapport auquel des données de réseau sont retenues, lesdites données de réseau comprenant (a) des données de noeud représentant un ensemble de noeuds (103-112), (b) des données d'adresse représentant une adresse respective MAC (Media Access Control) de chaque noeud, et (c) des données de connectivité représentant une connectivité respective de chaque noeud, le procédé comprenant:
déterminer (203), au temps réel près, qu'au moins un nouveau noeud, ayant une adresse MAC respective, est connecté au réseau ;
interroger (204) une pluralité de noeuds de connexion prédéterminés dans ledit réseau pour identifier des données de connectivité respectives dudit au moins un nouveau noeud, lesdites données de connectivité étant relatives à un port correspondant dans un noeud de connexion, au sein de ladite pluralité de noeuds de connexion prédéterminés, auquel ledit au moins un nouveau noeud est connecté ; et
augmenter (205) lesdites données de réseau afin d'inclure des données de noeuds représentatives de l'au moins un nouveau noeud, et les données d'adresse respectives et lesdites données de connectivité correspondantes dudit au moins un nouveau noeud.

2. Procédé selon la revendication 1, comprenant en outre éliminer (206), des données du réseau, les données de noeud représentatives de chaque noeud disparu ainsi que ses données d'adresse et les données de connectivité respectives.

3. Procédé selon la revendication 1, comprenant en outre obtenir les données de réseau retenues en lisant les données de réseau à partir d'un dispositif de mémoire.

4. Procédé selon la revendication 1, comprenant en outre déterminer les données de réseau retenues en analysant le réseau.

5. Appareil configuré pour retenir, au temps réel prés, la topologie d'un réseau dynamique (102), l'appareil comprenant :
un dispositif de mémoire (601) pour retenir les données de réseau comprenant (a) des données de noeud représentant un ensemble de noeuds (103-112), (b) des données d'adresse représentant une adresse respective MAC (Media Access Control) de chaque noeud, et (c) des données de connectivité représentant une connectivité respective de chaque noeud ;
un module de surveillance (602) configuré pour déterminer, au temps réel près, qu'au moins un nouveau noeud, ayant une adresse MAC respective, est connecté au réseau ;
un module de détermination (603) de connectivité configuré pour interroger une pluralité de noeuds de connexion prédéterminés dans ledit réseau pour identifier les données de connectivité respectives dudit au moins un nouveau noeud, lesdites données de connectivité étant relatives à un port correspondant dans un noeud de connexion, au sein de ladite pluralité de noeuds de connexion prédéterminés, auquel ledit au moins un nouveau noeud est connecté ; et
un module d'incrément (604) des données de réseau configuré pour incrémenter lesdites données de réseau de sorte à inclure les données de noeud représentatives dudit au moins un nouveau noeud, et les données d'adresse respectives et lesdites données de connectivité dudit au moins un nouveau noeud.

6. Appareil selon la revendication 5, comprenant en outre un module d'élimination (605) des données de réseau configuré pour éliminer, desdites données de réseau, des données de noeud représentatives de chaque noeud disparu ainsi que ses données d'adresse et données de connectivité respectives.

7. Produit pour programme d'ordinateur, comprenant un support d'utilisation pour ordinateur à l'intérieur duquel est prévu un code de programme lisible par ordinateur, ledit code de programme lisible par ordinateur étant apte à être exécuté pour implémenter un procédé pour maintenir, au temps réel près, la topologie d'un réseau dynamique (102), par rapport auquel ils existent des données de retenue de réseau, lesdites données de réseau comprenant (a) des données de noeud représentant un ensemble de noeuds (103-112), (b) des données d'adresse représentant une adresse respective MAC (Média Access Control) de chaque noeud, et (c) des données de connectivité représentant une connectivité respective de chaque noeud, le procédé comprenant :
déterminer (203), au temps réel près, qu'au moins un nouveau noeud, ayant une adresse MAC respective, est connecté au réseau ;
interroger (204) une pluralité de noeuds de connexion prédéterminés dans ledit réseau pour identifier des données de connectivité respectives dudit au moins un nouveau noeud, lesdites données de connectivité étant relatives à un port correspondant dans un noeud de connexion, au sein d'une pluralité de noeuds de connexion prédéterminés, auquel ledit au moins un nouveau noeud est connecté ; et
augmenter (205) lesdites données de réseau afin d'inclure des données de noeuds représentatives de l'au moins un nouveau noeud, et les données d'adresse et les données de connectivité correspondantes respectives dudit au moins un nouveau noeud.

8. Produit pour programme d'ordinateur selon la revendication 7, dans lequel le procédé comprend en outre éliminer (206), desdites données de réseau, les données de noeud représentatives de chaque noeud disparu ainsi que ses données d'adresse et données de connectivité respectives.

9. Produit pour programme d'ordinateur selon la revendication 7, dans lequel le procédé comprend en outre obtenir les données de réseau retenues en lisant les données de réseau à partir d'un dispositif de mémoire.

10. Produit pour programme d'ordinateur selon la revendication 7, dans lequel le procédé comprend en outre de déterminer les données de réseau retenues en analysant le réseau,
